# DEMANDE DE BREVET EUROPEEN

(11) **EP 1 167 927 A1**
(43) Date de publication de la demande: **02.01.2002**
(21) Numéro de dépôt: 01401612.5
(22) Date de dépôt: 19.06.2001
(51) Int. Cl.: G01D 5/245, B62D 15/02

(54) **Dispositif de détermination de la position angulaire absolue d'un organe tournant**

(30) Priorité: 30.06.2000 FR 0008507
(71) Demandeur: SNR ROULEMENTS, F-74010 Annecy (FR)
(72) Inventeur: Nicot, Christophe, 74330 Epagny (FR); Desbiolles, Pascal, 74570 Thorens-Glieres (FR)
(74) Mandataire: Geismar, Thierry

(57) **Abrégé**

Dispositif de détermination de la position angulaire absolue d'un organe tournant par rapport à une structure fixe au moyen d'un capteur (16) de position angulaire relative, comprenant :
- un anneau magnétique multipolaire ;
- un capteur magnétique fixe (16) ;
- un dispositif de traitement (26) qui comporte :
   - des moyens de détection (27) d'une position angulaire de l'anneau multipolaire (11) proche d'une position angulaire de référence ;
   - des moyens de recalage (28) de la position angulaire de l'anneau (11), actionnés par les moyens de détection (27), aptes à affecter une valeur dite d'offset à la valeur de la position angulaire absolue de l'anneau multipolaire (11); et
   - des moyens de détermination (29) de la position angulaire absolue de l'anneau (11) sur l'ensemble des tours effectués par l'organe tournant (3, 4), à partir de la valeur d'offset et des variations de la position angulaire.

## Description

L'invention concerne un dispositif de détermination de la position angulaire absolue d'un organe tournant par rapport à une structure fixe au moyen d'un capteur de position angulaire relative.

Elle concerne également un système de mesure de la position angulaire absolue d'un volant de direction d'un véhicule par rapport au châssis du véhicule, comprenant un tel dispositif.

Elle concerne en outre un procédé de mesure de la position angulaire d'un volant de direction d'un véhicule par rapport au châssis de celui-ci, au moyen d'un tel système de mesure.

Pour faciliter au lecteur la compréhension de ce qui suit, l'on donne dès à présent les définitions de la position angulaire relative, notée θᵣ, et de la position angulaire absolue, notée θₐ, d'un organe tournant par rapport à une structure fixe.

On entend par position angulaire relative θᵣ de l'organe tournant l'angle séparant la position de l'organe tournant à un moment donné, d'une position initiale quelconque de celui-ci par rapport à la structure fixe, cette position initiale pouvant varier, d'une mesure à l'autre, par rapport à la structure fixe.

On entend par position angulaire absolue θₐ l'angle séparant la position de l'organe tournant à un moment donné, d'une position de référence de l'organe tournant, cette position de référence étant fixe par rapport à la structure fixe.

On connaît des capteurs de position relative, comprenant d'une part un anneau magnétique multipolaire sur lequel sont aimantées une pluralité de paires de pôles Nord et Sud, mobile en rotation en face d'un capteur magnétique fixe comprenant au moins trois éléments sensibles, positionnés en regard respectivement d'une piste principale et d'une piste de référence « top tour », et d'autre part un dispositif de traitement des signaux de sortie émis par les éléments sensibles, destiné à donner une impulsion de référence par tour d'un organe de rotation solidaire de l'anneau multipolaire.

Ce type de capteur est décrit dans le document FR-2 769 088, au nom de la demanderesse.

Ce type de capteur donne entière satisfaction pour les applications nécessitant de ne connaître que la position angulaire relative d'un organe tournant par rapport à un organe fixe.

Par contre, ce type de capteur ne permet pas de connaître la position absolue de l'organe tournant lorsque celui-ci effectue une pluralité de tours sur lui-même.

Certaines applications, telles que les systèmes de contrôle de trajectoire d'un véhicule (du type ESP®), nécessitent de connaître la position angulaire réelle du volant de direction par rapport à une position médiane fixe par rapport au châssis, et dans laquelle les roues du véhicule sont droites par rapport à celui-ci.

Les capteurs du type de celui décrit dans le document FR-2 768 088 ne permettent de connaître que les variations de position angulaire du volant, mais ne permettent pas de connaître sa position angulaire absolue, correspondant à sa position angulaire réelle.

On connaît des capteurs d'angle absolu du type optique ou magnétique, des capteurs d'angle du type multi - tour à base d'engrenages. L'encombrement et le mode de fonctionnement de ces types de capteurs nécessitent toutefois d'adapter les organes environnants, et qui ne répondent pas aux exigences actuelles des constructeurs automobiles, notamment en termes d'encombrement et de coût.

L'invention vise à résoudre notamment les inconvénients précités de l'art antérieur, en proposant un dispositif de détermination de la position angulaire absolue d'un organe tournant par rapport à une structure fixe au moyen d'un capteur de position angulaire relative, qui présente un encombrement et un coût réduits par rapport aux dispositifs existants, qui soit de fonctionnement relativement simple et qui soit adaptable de manière aisée aux systèmes d'aide à la conduite et/ou aux systèmes de sécurité actuels des véhicules.

A cet effet, un premier objet de l'invention est un dispositif de détermination de la position angulaire absolue θₐ d'un organe tournant par rapport à une structure fixe au moyen d'un capteur de position angulaire relative θᵣ, comprenant :
- un anneau magnétique multipolaire circulaire mobile en rotation, destiné à être solidaire de l'organe tournant, l'anneau multipolaire étant apte à effectuer, conjointement à l'organe tournant, une pluralité de tours autour de son axe de rotation à partir d'une position angulaire dite de référence, ledit anneau comprenant une piste principale et une piste de référence dite « top tour », les pistes principale et « top tour » étant concentriques sur l'anneau magnétique ;
- un capteur magnétique fixe, destiné à être solidaire de la structure fixe, disposé en regard et à distance d'entrefer de l'anneau multipolaire, et comprenant au moins trois éléments sensibles dont au moins deux sont positionnés en regard de la piste principale de sorte à délivrer deux signaux électriques A, B périodiques en quadrature et au moins un est positionné en regard de la piste de référence de sorte à délivrer un signal électrique C de référence dit « top tour », sous forme d'une impulsion électrique par tour du codeur multipolaire, cette impulsion correspondant à une position angulaire dite «top tour », de l'organe tournant par rapport à la structure fixe, le décalage angulaire entre la dite position angulaire de référence et la dite position angulaire « top tour » étant dit « offset » (notée θ_{offset}) ;
- des moyens de comptage des impulsions issues des signaux A, B aptes à permettre la détermination de la position angulaire relative θᵣ de l'anneau multipolaire et les variations de cette position angulaire relative θᵣ ;
ce dispositif de détermination comprenant en outre un dispositif de traitement comportant
- des moyens de détection d'une position angulaire θ₀ de l'anneau multipolaire proche de la dite position angulaire de référence ;
- des moyens de recalage de la position angulaire absolue θₐ de l'anneau multipolaire, actionnés par les moyens de détection, aptes à affecter, lors de la détection d'une impulsion du signal « top tour » C, la valeur d'offset θ_{offset} à la valeur de la position angulaire absolue θₐ de l'anneau multipolaire par rapport à sa position angulaire de référence ; et
- des moyens de détermination de la position angulaire absolue θₐ de l'anneau sur l'ensemble des tours effectué par l'organe tournant, à partir de la valeur d'offset θ_{offset} et des variations de la position angulaire relative θᵣ.

De la sorte, il est possible d'obtenir, à partir d'un capteur de position angulaire relative, une mesure de position absolue sans prévoir de système encombrant, ni apporter de modification importante à l'organe tournant ou à la structure fixe.

Par ailleurs, cette mesure est directement exploitable par les systèmes d'aide à la conduite, par les systèmes de sécurité d'un véhicule.

Selon un mode de réalisation, les moyens de recalage sont agencés pour affecter la dite valeur de référence à la valeur de la position absolue (θₐ) lors de la détection de la position angulaire (θ₀) proche de la valeur de référence.

Le dispositif de traitement se présente par exemple sous la forme d'un microrégisseur apte à recevoir les signaux délivrés par le capteur.

En outre, le dispositif de traitement peut comprendre :
- une première mémoire du type EEPROM ou mémoire flash, apte à mémoriser la valeur d'offset, reliée au dit microrégisseur ; et/ou
- une deuxième mémoire du type EEPROM ou mémoire flash, apte à mémoriser la valeur de la position absolue θₐ de l'anneau multipolaire par rapport à sa position angulaire de référence.

Selon un mode de réalisation, II est prévu un système de mise en veille dit « local », apte à alimenter en courant le capteur en permanence pour le maintenir en fonction.

Selon une variante, un système un système de mise en veille dit « global », apte à alimenter en courant le capteur et le dispositif de traitement en permanence pour permettre le calcul de la position angulaire absolue θₐ du codeur multipolaire à tout instant.

Un deuxième objet de l'invention est un système de mesure de la position angulaire absolue θₐ d'un volant de direction d'un véhicule par rapport au châssis du véhicule, qui comprend un dispositif tel qu'il vient d'être décrit, l'anneau magnétique multipolaire étant solidaire du volant de direction, le capteur magnétique étant solidaire du châssis, le dit système de mesure comprenant en outre des moyens de mesure de la vitesse du véhicule et des moyens de mesure de la vitesse V_{g}, V_{d} des roues directrices du véhicules, les moyens de détection comprenant des moyens de différentiation de ces vitesses V_{g}, V_{d}.

Les moyens de détection comprennent par exemple un premier moyen comparateur de la vitesse du véhicule à une première valeur seuil S1, ainsi qu'un deuxième moyen comparateur de la valeur absolue de la différence V_{dif} des vitesses V_{g}, V_{d} des roues à une deuxième valeur seuil S2.

Peuvent en outre être prévus :
- des moyens de mesure du couple Γ appliqué sur le volant de direction, les moyens de détection comprenant un troisième moyen comparateur de la valeur du couple Γ à une troisième valeur seuil S3 ;
- des moyens de mesure de la vitesse de rotation Vᵥₒₗ du volant de direction, les moyens de détection comprenant un quatrième moyen comparateur de la valeur de la vitesse de rotation Vᵥₒₗ à une quatrième valeur seuil S4.
un troisième objet de l'invention est un procédé de mesure de la position angulaire absolue θₐ d'un volant de direction d'un véhicule par rapport au châssis de celui-ci, au moyen d'un système de mesure tel que décrit ci-dessus, ce procédé comprenant une procédure d'initialisation réalisée lors d'une mise en fonction du dispositif, cette procédure comportant les étapes prévoyant de :
- détecter la position angulaire θ₀ proche de la position angulaire de référence ;
- détecter une impulsion « top tour » ;
- affecter la valeur d'offset θ_{offset} à la valeur de la position angulaire absolue θₐ de l'anneau multipolaire ;

Ce procédé peut en outre comprendre les étapes prévoyant, après la procédure d'initialisation, de :
- compter en continu les signaux A, B issus du capteur ;
- répercuter en continu toute variation de la position angulaire relative θᵣ sur la position angulaire absolue θₐ de l'anneau multipolaire.

L'on peut en outre prévoir, préalablement à la détection de la position angulaire θ₀ proche de la position angulaire de référence, de compter en continu les signaux A, B, et de déterminer en continu la position angulaire relative θᵣ de l'anneau multipolaire.

La procédure d'initialisation comprend par exemple une étape prévoyant, entre la détection de la position angulaire θ₀ proche de la position angulaire de référence et la détection de l'impulsion « top tour », d'affecter la valeur de la position angulaire de référence à la valeur de la position angulaire absolue position angulaire θₐ.

Peuvent être également prévues les étapes prévoyant de :
- activer un système de mise en veille dit « local » alimentant en courant le capteur en permanence ;
- mémoriser la valeur de la position absolue θₐ ;
- compter en continu les signaux A, B issus du capteur pour mesurer la variation de la position relative θᵣ de l'anneau multipolaire ;
- désactiver le système de mise en veille ;
- répercuter la variation de la position relative θᵣ sur la valeur de la position absolue θₐ mémorisée.

La détection de la position angulaire θ₀ proche de la position angulaire de référence peut être réalisée au moyen des étapes suivantes :
- mesurer la vitesse du véhicule Vᵥ et la comparer à une première valeur seuil S1 ;
- mesurer les vitesses V_{g}, V_{d} des roues directrices du véhicule et comparer leur différence V_{dif} à une deuxième valeur seuil (S2) ;
la dite position angulaire θ₀ proche de la position angulaire de référence étant détectée si la vitesse du véhicule Vᵥ est supérieure à la première valeur seuil S1, la valeur absolue de la différence V_{dif} des vitesses V_{g}, V_{d} des roues étant en outre inférieure à la deuxième valeur seuil S2.

La détection de la position angulaire θ₀ proche de la position angulaire de référence peut comprendre :
- une étape prévoyant de mesurer le couple Γ appliqué au volant de direction du véhicule et le comparer à une troisième valeur seuil S3, la dite position angulaire θ₀ proche de la position angulaire de référence étant détectée si, en outre, la valeur du couple Γ appliqué au volant de direction est inférieur à la troisième valeur seuil S3, et/ou
- une étape prévoyant de mesurer la vitesse de rotation Vᵥₒₗ du volant de direction du véhicule, et la comparer à une quatrième valeur seuil S4, la dite position angulaire θ₀ proche de la position angulaire de référence étant détectée si, en outre, la valeur de la vitesse de rotation Vᵥₒₗ est inférieure à la quatrième valeur seuil S4.

D'autres objets et avantages de l'invention apparaîtront au cours de la description qui va suivre de modes de réalisation, description faite en référence aux dessins annexés, dans lesquels :
- la figure 1 est une représentation schématique d'un véhicule inscrit dans un virage ; ce véhicule comprend un système de sécurité comprenant un système de mesure relié à différents organes du véhicule, notamment les roues directrices et l'arbre de direction ; ce système de mesure permet de calculer la position angulaire absolue du volant de direction commandant l'arbre de direction ;
- la figure 2 est une vue schématique d'un détail de la figure 1 ; un anneau magnétique multipolaire est monté sur l'arbre de direction du véhicule, tandis qu'un capteur est monté sur le châssis en étant disposé en regard de l'anneau multipolaire ;

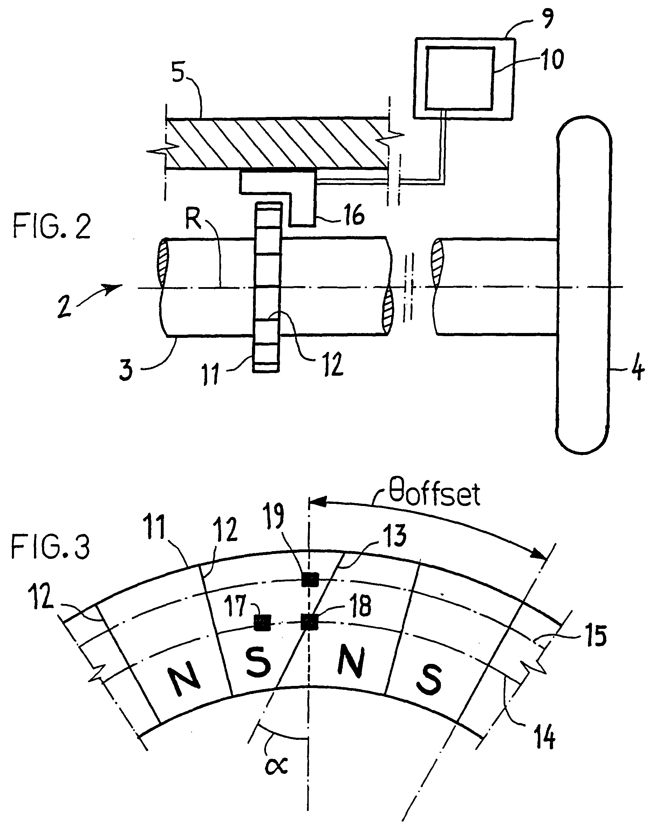

- la figure 3 montre une portion de l'anneau magnétique multipolaire, sur laquelle sont représentés deux paires de pôles Nord et Sud ; deux pistes concentriques sont représentées en traits mixtes : une piste principale intérieure et une piste de référence « top tour » extérieure ; trois éléments sensibles d'un capteur sont également représentés sous forme de carrés noirs ; l'un d'entre eux est disposé en regard de la piste « top tour », les deux autres étant disposés en regard de la piste principale ; les deux paires de pôles sont situées de part et d'autre d'une singularité magnétique sous forme d'une jonction oblique entre un pôle Sud et un pôle Nord adjacent ; cette singularité permet d'obtenir un signal « top tour » sous forme d'une impulsion par tour de l'anneau ;
- la figure 4 est une représentation graphique des signaux électriques issus du capteur et des signaux numériques carrés correspondants, avec le signal de référence « top tour » ;

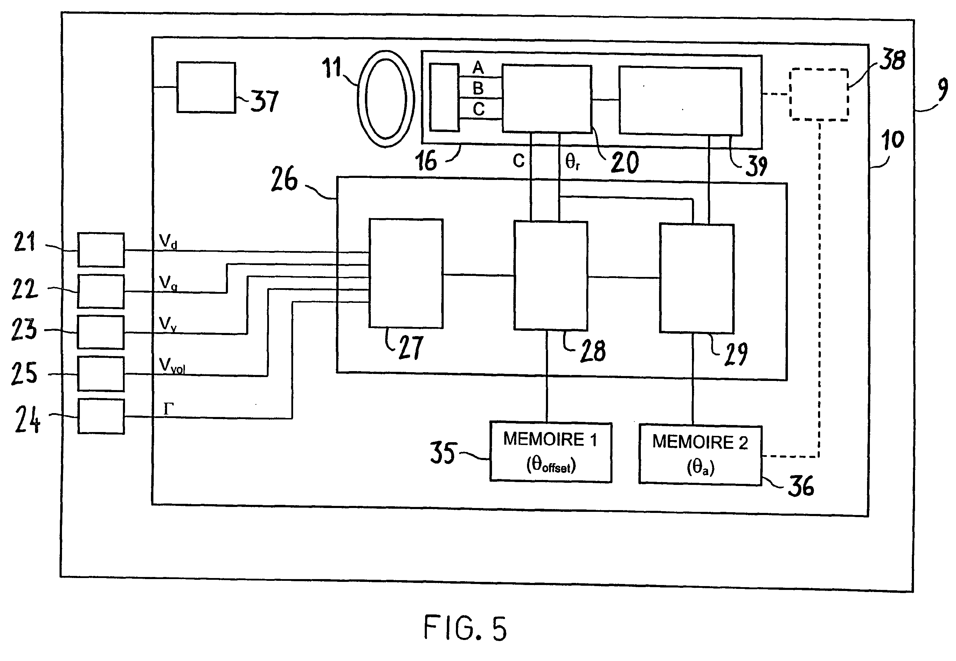

- la figure 5 est une représentation schématique du système de mesure selon l'invention, permettant d'obtenir la position angulaire absolue du volant de direction ;
- la figure 6 est un schéma logique illustrant un mode de réalisation d'une condition nécessaire pour permettre la réinitialisation du registre de position absolue ;
- la figure 7 est un graphique représentant la position angulaire absolue de l'anneau multipolaire en fonction de la position angulaire réelle de l'organe tournant, selon un mode de réalisation où le dispositif de détermination comprend un système de mise en veille global ; les points ① et ② correspondent à deux étapes successives de mesure de la position angulaire absolue de l'anneau multipolaire ;
- la figure 8 est un graphique similaire au graphique de la figure 7, selon un mode de réalisation où le dispositif de mesure comprend un système de mise en veille local, les points ① , ② et ③ correspondant à trois étapes successives de mesure de la position angulaire absolue de l'anneau multipolaire ;
- la figure 9 est un graphique similaire aux graphiques des figures 7 et 8, illustrant la procédure de réinitialisation du registre d'angle absolu ;
- la figure 10 est un diagramme illustrant des étapes d'un programme de réinitialisation du registre de position angulaire absolue ;
- la figure 11 est un diagramme illustrant des étapes d'un sous programme du programme de la figure 12, permettant de réinitialiser le registre de position absolue ; et

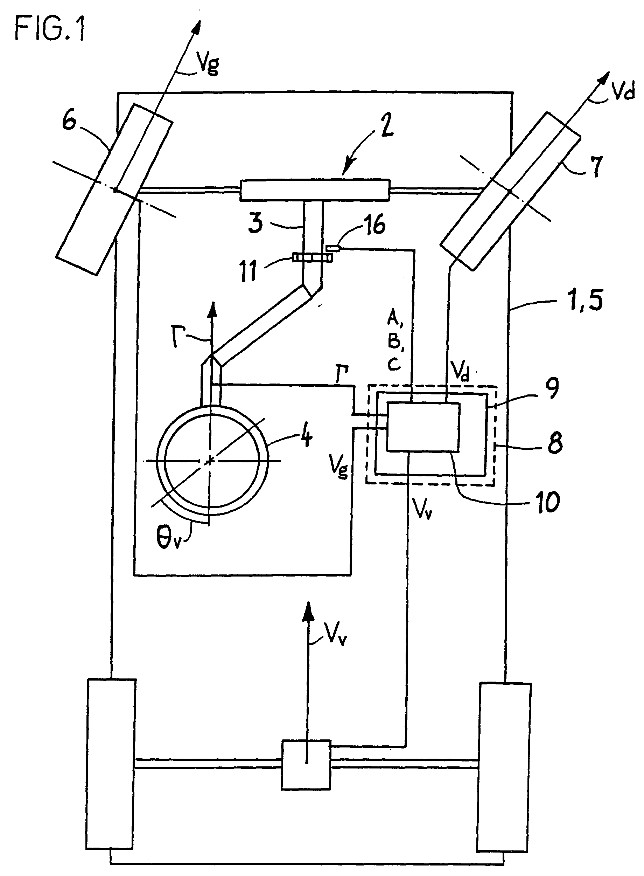

Sur la figure 1 est représenté un véhicule 1 circulant à une vitesse linéaire Vᵥ, comprenant un système de direction 2 qui comporte un arbre de direction 3 commandé par un volant de direction 4, l'arbre 3 et le volant 4 étant montés tournants par rapport au châssis 5 du véhicule 1.

En ligne droite, les roues directrices gauche 6 et droite 7 du véhicule 1 sont supposées parallèles, leurs vitesses de déplacement respectives, notées Vg et V_{d}, étant égales à la vitesse Vᵥ du véhicule 1.

Lorsqu'un couple Γ est appliqué sur l'axe du volant 4, celui-ci tourne autour de son axe pour prendre une position angulaire θᵥ.

La position angulaire θᵥ, qui est la position angulaire réelle du volant, est supposée :
- nulle lorsque le véhicule 1 circule en ligne droite, aucun couple n'étant appliqué sur le volant 4 ; le volant 4 est alors dans une position angulaire dite d'équilibre, fixe par rapport au châssis 5 ;
- strictement positive lorsqu'un couple Γ est appliqué sur le volant 4 pour inscrire le véhicule 1 dans un virage à droite, la vitesse de la roue gauche Vg étant alors strictement supérieure à la vitesse de la roue droite V_{d} ;
- strictement négative lorsqu'un couple Γ est appliqué sur le volant 4 pour inscrire le véhicule 1 dans un virage à gauche, la vitesse de la roue gauche V_{g} étant alors strictement inférieure à la vitesse de la roue droite V_{d}.

Dans la suite de la description, les positions angulaires sont exprimées en radians. On rappelle qu'une mesure angulaire d'une valeur de 1 radian correspond à une mesure angulaire de 57,2957 degrés environ, une mesure angulaire de 2π radians correspondant à une mesure angulaire de 360 degrés (c'est-à-dire un tour complet).

L'on suppose pour simplifier que le volant 4 peut effectuer quatre tours complets sur lui-même : deux tours à gauche depuis sa position d'équilibre vers une position de braquage maximum gauche (où θᵥ = - 4π) et deux tours à droite depuis la position d'équilibre jusqu'à une position de braquage maximum droite (où θᵥ = + 4π).

L'on comprend d'après ce qui précède que θᵥ est une position angulaire absolue du volant 4 par rapport au châssis 5, comprise entre - 4π et + 4π.

L'on souhaite obtenir une mesure précise de cette position angulaire θᵥ.

En effet, cette position angulaire θᵥ peut être requise par un système de sécurité 8 tel qu'un système anti-patinage, un système antiblocage, un système antiroulis, ou encore un système d'aide à la navigation.

A cet effet, le véhicule est équipé d'un système de mesure 9 apte notamment à mettre en oeuvre un procédé pour déterminer la position angulaire θᵥ.

Ce système de mesure 9 comporte un dispositif 10 de détermination de la position angulaire θᵥ, qui comprend un anneau magnétique multipolaire 11 circulaire mobile en rotation, monté sur l'arbre de direction 3 ou sur le moyeu du volant 4, et solidaire de celui-ci pour effectuer, conjointement à lui, une pluralité de tours sur lui-même autour de son axe de rotation, noté R.

Ainsi, l'anneau multipolaire 11 est apte à effectuer 4 tours complets conjointement au volant de direction 4.

L'on note θₐ la position angulaire absolue (également dit angle absolu) de l'anneau multipolaire 11, constituant une mesure de la position angulaire réelle θᵥ du volant 4.

Cette position angulaire absolue θₐ est définie arbitrairement par rapport à une position angulaire dite de référence fixe par rapport au châssis 5, correspondant à la position d'équilibre du volant 4, dans laquelle θₐ est nulle par définition, de sorte que θₐ est égale à θᵥ, en permanence.

On décrit à présent une manière de mesurer les variations de la position angulaire absolue θₐ.

L'anneau 11 comprend une pluralité de paires de pôles Nord et Sud adjacents dont les jonctions 12 sont étendues radialement, sauf l'une d'entre elles, dite jonction singulière 13, qui forme par exemple un angle α avec une direction radiale.

Deux pistes magnétiques concentriques sont définies sur l'anneau 11 : une piste principale intérieure 14, et une piste de référence 15 dite « top tour » extérieure.

Un capteur magnétique 16 de position angulaire relative, fixe, solidaire du châssis 5 et intégré au dispositif 10, est disposé en regard de l'anneau multipolaire 11.

Ce capteur 16 comprend au moins trois éléments sensibles dont au moins deux 17, 18 sont positionnés en regard de la piste principale 14 et au moins un 19 en regard de la piste « top tour » 15.

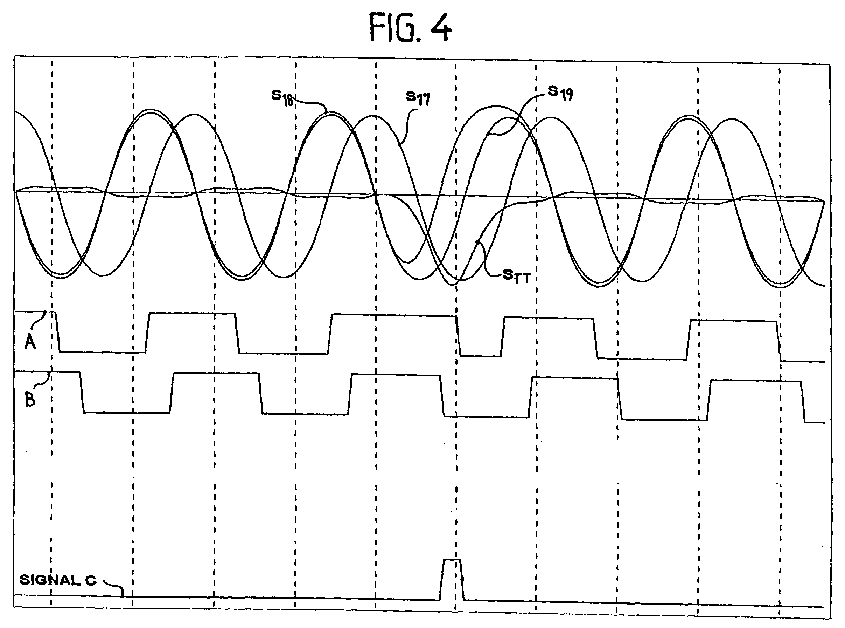

Les éléments sensibles 17, 18, 19 sont par exemple des sondes à effet Hall et émettent des signaux électriques notés respectivement S17, S18, S19, représentés sur la figure 4.

Le traitement électronique de ces signaux S17, S18, S19 au sein du capteur 16 permet d'obtenir deux signaux numériques carrés en quadrature A et B, ainsi qu'un signal numérique C de référence « top tour ».

Le capteur 16 effectue par exemple la différence analogique entre les signaux S19 et S18 au moyen d'un différentiateur pour délivrer un signal analogique S_{TT} de référence « top tour », comparé à un seuil fixe de référence au moyen d'un comparateur pour obtenir le signal numérique C « top tour ».

Un principe d'obtention des signaux numériques A, B, C, ainsi que différents modes de réalisation de l'anneau magnétique 11 et du capteur 16 sont décrits plus en détail dans la demande de brevet N° FR-2 769 088 au nom de la demanderesse.

Afin de mesurer une position angulaire de l'anneau multipolaire 11, dite relative, notée θᵣ, par rapport à une position initiale dans laquelle se trouve l'anneau 11, par exemple lors de la mise en route du véhicule 1, le dispositif 10comprend des moyens de comptage 20 des impulsions des signaux A ou B, par exemple intégrés au capteur 16.

Ces moyens de comptage 20 comprennent par exemple un registre dans lequel la valeur de la position relative θᵣ est incrémentée ou décrémentée en fonction des impulsions détectées.

Les variations de la position angulaire relative θᵣ sont identiques aux variations de la position angulaire absolue θₐ.

Afin d'obtenir une mesure exacte de la position angulaire absolue θₐ, on détermine une valeur initiale de θₐ, les variations ultérieures de la position θₐ étant déterminées par le capteur 16.

A cet effet, le procédé de mesure de θₐ comporte une procédure d'initialisation qui peut être mise en oeuvre avant la première mise en circulation du véhicule 1, des moyens pour mémoriser la valeur de θₐ entre deux coupures de contact étant alors prévus.

Selon une variante, cette procédure peut être réalisée après chaque mise en route du véhicule, aucun moyen pour mémoriser la valeur de θₐ entre deux coupures de contact n'étant prévu (l'initialisation de θₐ étant récurrente, on parle de réinitialisation).

Cette procédure d'initialisation, ou de réinitialisation, peut être réalisée de la manière suivante.

En premier lieu, on détecte une position angulaire du volant 4 proche de sa position d'équilibre, c'est-à-dire une position angulaire absolue θ₀ de l'anneau 11 proche de la position angulaire de référence, ce qui signifie que les roues du véhicule 1 sont droites.

Cette détection peut comprendre les étapes suivantes :
- on mesure la vitesse Vᵥ du véhicule 1 (par exemple par pondération des vitesses des roues) et on la compare à une première valeur seuil S1, par exemple de l'ordre de 10 kilomètres par heure ;
- on mesure les vitesses V_{g}, V_{d} des roues directrices gauche et droite ;
- on calcule la valeur absolue V_{dif} de la différence V_{g} - V_{d} des vitesses des roues et on compare cette valeur à une deuxième valeur seuil S2, par exemple de l'ordre de 1 kilomètre par heure.

On suppose que la position angulaire absolue θₐ est égale à θ₀ si les conditions suivantes sont réunies simultanément : Vᵥ > S1 et |V_{dif}|< S2.

Par ailleurs, la procédure de détection peut comporter une étape prévoyant de mesurer le couple Γ appliqué au volant 4 et de le comparer à une troisième valeur seuil S3, par exemple de l'ordre de 1 Newton - mètre.

La position angulaire absolue θₐ de l'anneau 11 est alors supposée sensiblement égale à θ₀ si les trois conditions suivantes sont réunies simultanément : Vᵥ > S1, |V_{dif}|< S2 et Γ < S3.

En outre, la procédure de détection peut comporter une étape supplémentaire prévoyant de mesurer la vitesse de rotation Vᵥₒₗ du volant 4 et la comparer à une quatrième valeur seuil S4, par exemple de l'ordre de 0,2 radian par seconde.

La position angulaire absolue θₐ de l'anneau 11 est alors supposée sensiblement égale à θ₀ si les quatre conditions suivantes sont réunies simultanément : Vᵥ > S1, |V_{dif}| < S2, Γ < S3 et Vᵥₒₗ < S4.

Le véhicule 1 est alors supposé rouler à une vitesse supérieure à S1, sensiblement en ligne droite.

La position θ₀ étant détectée, la valeur de la position angulaire de référence (en l'occurrence la valeur nulle) est affectée à la valeur de la position angulaire absolue θₐ de l'anneau multipolaire 11.

La procédure d'initialisation, ou de réinitialisation, prévoit en deuxième lieu de détecter une impulsion « top tour » dite de référence, définie de la manière suivante.

Un tour complet de volant 4, ou d'anneau multipolaire 11, sépare deux impulsions « top tour » successives.

Depuis la position de braquage gauche jusqu'à la position de braquage droite, le capteur 16 détecte 4 impulsions « top tour » successives.

A l'impulsion la plus proche angulairement de la position angulaire de référence de l'anneau multipolaire 11 correspond une valeur de la position absolue dite position angulaire de référence « top tour ». On suppose pour simplifier la suite de la description que cette impulsion est détectée en tournant le volant 4 à droite à partir de sa position d'équilibre.

Bien entendu, dans des variantes cette impulsion peut être détectée en tournant le volant 4 à gauche.

On nomme « offset » et l'on note θ_{offset} le décalage angulaire entre la position angulaire de référence « top tour », et la position angulaire de référence.

il est possible mécaniquement de monter l'anneau multipolaire 11 de sorte que la position angulaire absolue « top tour » corresponde à la position de référence, l'offset θ_{offset} étant alors nul.

Toutefois, la demanderesse a constaté que ce positionnement mécanique est difficilement réalisable de manière systématique et fiable dans le contexte d'une production de grande série, l'offset θ_{offset} étant non nul dans la grande majorité des cas.

Il apparaît donc plus aisé de mémoriser la valeur d'offset θ_{offset} lors du montage du véhicule 1 en usine.

Après la détection de l'impulsion « top tour » de référence, la procédure d'initialisation prévoit d'affecter la valeur d'offset θ_{offset} à la valeur de la position angulaire absolue θₐ.

La position angulaire absolue θₐ est ainsi initialisée - ou réinitialisée.

Pour déterminer la valeur de l'offset θ_{offset}, par exemple avant la première mise en circulation du véhicule 1, on procède de la manière suivante :
- le véhicule 1 étant positionné sur un banc de roulage pour le réglage du parallélisme des roues 6, 7, on met les roues 6, 7 droites ;
- on affecte à la valeur de position angulaire relative la valeur nulle ;
- on tourne le volant à gauche et/ou à droite de sorte à détecter l'impulsion « top tour » ; à la détection de cette impulsion correspond la valeur d'offset θ_{offset} de la position angulaire relative.

Pour déterminer par la suite la position angulaire absolue à tout instant, on compte en continu les signaux A, B à l'aide des moyens de comptage 20, et on répercute sur la valeur de la position angulaire absolue θₐ toute variation de la position angulaire relative θᵣ.

Afin de permettre la mise en oeuvre de la procédure de réinitialisation, le système de mesure 9 comprend :
- des moyens de mesure 21, 22 de la vitesse V_{d}, V_{g} des roues directrices 6, 7 ;
- des moyens de mesure 23 de la vitesse Vᵥ du véhicule.

Le système de mesure 9 peut en outre comprendre :
- des moyens de mesure 24 du couple Γ appliqué au volant 4 ; et
- des moyens de mesure 25 de la vitesse de rotation Vᵥₒₗ du volant 4.

Le système de mesure 9 comprend en outre un dispositif de traitement 26 comportant
- des moyens de détection 27 de la position angulaire θ₀ ;
- des moyens de recalage 28 de la position angulaire absolue θₐ de l'anneau multipolaire 11, actionnés par les moyens de détection 27, et aptes à affecter, lors de la détection de l'impulsion de référence « top tour », la valeur d'offset θ_{offset} à la valeur de la position angulaire absolue θₐ ; et
- des moyens de détermination 29 de la position angulaire absolue θₐ, à partir de la valeur d'offset θ_{offset} et des variations de la position angulaire relative θᵣ mesurées par le capteur 16.

Les moyens de détermination 29 sont reliés aux moyens de recalage 28 et aux moyens de comptage 20.

Selon un mode de réalisation, les moyens de recalage 28 sont agencés pour affecter la valeur de référence (nulle) à la valeur de la position absolue θₐ lors de la détection de la position angulaire θ₀.

Les moyens de recalage 28 sont reliés aux moyens de comptage 20 et aux moyens de détection 27, ceux-ci étant eux-mêmes reliés aux moyens de mesure 21 à 25.

Afin de permettre la détection de la position angulaire θ₀, les moyens de détection 27 comprennent :
- des premiers moyens comparateurs 30 de la vitesse Vᵥ du véhicule à la première valeur seuil S1 ;
- des moyens de différentiation 31 des vitesses V_{d}, V_{g} des roues droite et gauche et des deuxièmes moyens comparateurs 32 de la valeur absolue V_{dif} de la différence des vitesses V_{d}, V_{g} à la deuxième valeur seuil S2 ;

Les moyens de détection 27 peuvent en outre comprendre :
- des troisièmes moyens comparateurs 33 du couple Γ appliqué au volant 4 à la troisième valeur seuil S3 ; et
- des quatrièmes moyens comparateurs 34 de la vitesse du volant Vᵥₒₗ à la quatrième valeur seuil S4.

Selon un mode de réalisation, le dispositif de traitement 26 est un circuit électronique comprenant des sous-ensembles formant les moyens de détection 27, les moyens de recalage 28 et les moyens de détermination 29 de la position absolue θₐ.

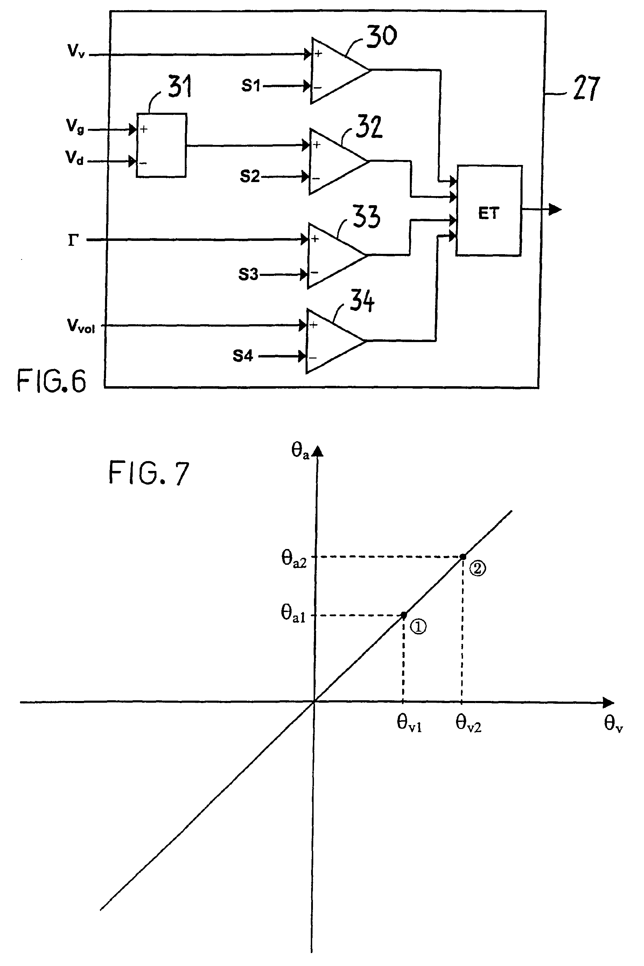

Un exemple de réalisation des moyens de détection est illustré sur la figure 6.

Selon un autre mode de réalisation, le dispositif de traitement 26 est un microrégisseur contenant un programme principal qui comprend au moins trois sous-programmes formant respectivement moyens de détection 27, moyens de recalage 28, et moyens de détermination 29 de la position angulaire absolue θₐ.

Le microrégisseur 26 est agencé pour recevoir les signaux en provenance du capteur 16 d'une part, et les signaux en provenance des moyens de mesure 21 à 25 d'autre part.

La valeur d'offset θ_{offset} peut être mémorisée dans une première mémoire 35 du type EEPROM, reliée au microrégisseur 26 formant registre d'offset.

A tout instant, la valeur d'offset θ_{offset} peut quant à elle être introduite dans un registre incrémentiel intégré au microrégisseur 26.

La valeur θₐ peut en outre être mémorisée, notamment avant une coupure de contact, dans une deuxième mémoire 36 du type EEPROM ou mémoire flash, reliée au microrégisseur 26, et formant registre de position angulaire absolue θₐ.

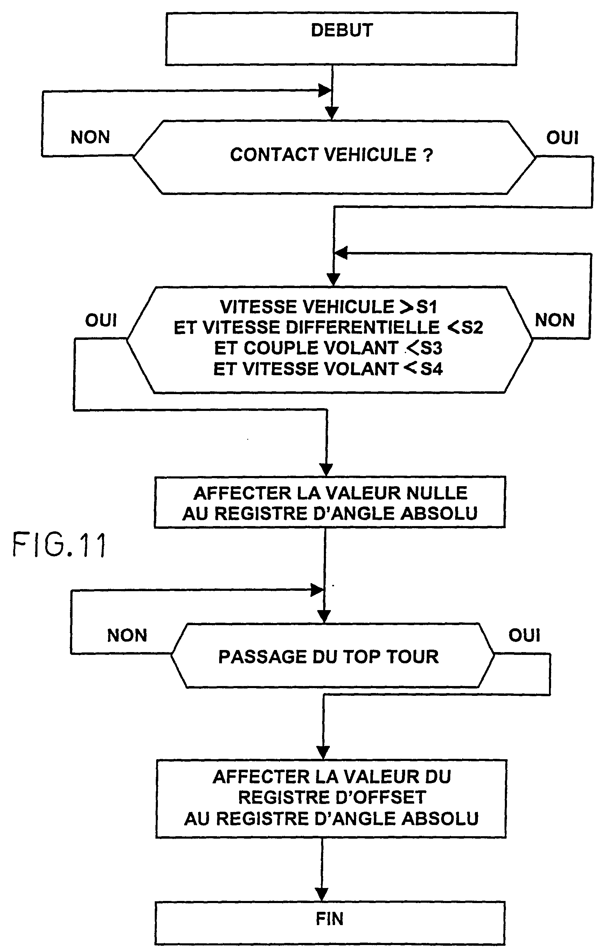

Selon un mode de réalisation, la procédure d'initialisation, illustrée sur le diagramme de la figure 11, est réalisée lors de chaque mise en route du véhicule 1, la valeur de la position angulaire absolue θₐ n'étant pas mémorisée lors d'une coupure de contact du véhicule 1.

La procédure d'initialisation peut être signalée au conducteur du véhicule 1.

Lorsque le contact du véhicule 1 est détecté, le dispositif de traitement 26 commande par exemple l'allumage d'un voyant lumineux du tableau de bord du véhicule 1, indiquant au conducteur que son véhicule 1 fonctionne momentanément dans un mode « dégradé », c'est-à-dire que le système de mesure 9 est momentanément inapte à mesurer la position angulaire θₐ du volant 4 (cependant la mesure de la position angulaire relative θᵣ reste possible dans ce mode dégradé).

Le dispositif de traitement 26 commande alors la réinitialisation du registre de position angulaire absolue θₐ.

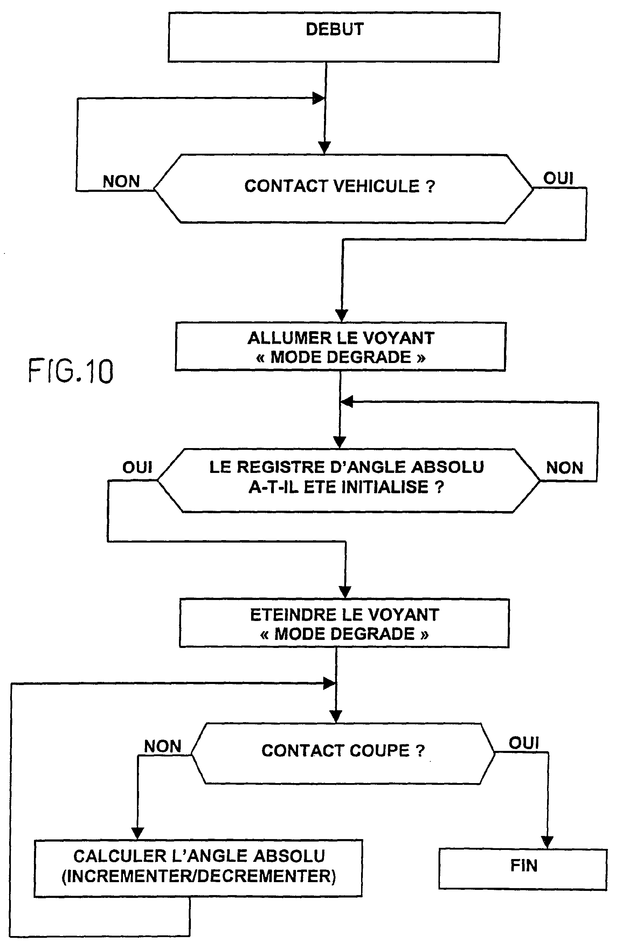

Une fois cette opération effectuée, le programme commande l'extinction du voyant lumineux et, jusqu'à l'arrêt du moteur par coupure du contact, le système de mesure 9 calcule à tout instant la position angulaire absolue θₐ de l'anneau 11 (figure 10).

Selon un autre mode de réalisation, il n'est pas nécessaire de procéder à la réinitialisation systématique de la position angulaire absolue θₐ.

Selon une première variante, le dispositif de détermination 10 comprend un système de mise en veille global 37, qui alimente en courant le capteur 16 et le dispositif de traitement 26 en permanence - y compris lors d'une coupure de contact du véhicule 1.

De la sorte, la mesure de la position angulaire absolue θₐ est réalisée en permanence, indépendamment de l'état de marche du véhicule 1.

A cet effet, le système de mise en veille global 37 est par exemple relié à la batterie d'accumulateurs du véhicule 1 qui l'alimente en courant.

Ainsi, toute action sur le volant 4, même lorsque le véhicule 1 est hors fonction, provoque une variation de la position angulaire absolue θₐ.

Dans ce mode de réalisation, les moyens de comptage 20 peuvent être intégrés au microrégisseur 26.

Cette première variante est illustrée sur le graphique de la figure 7, qui représente la position angulaire absolue θₐ de l'anneau multipolaire 11 en fonction de la position angulaire réelle θᵥ du volant 4.

A un instant ① précédant immédiatement la coupure de contact du véhicule 1, le volant 4 est dans une position angulaire θᵥ₁, à laquelle correspond une mesure θₐ₁ de la position angulaire de l'anneau multipolaire 11.

A un instant ② suivant immédiatement une nouvelle mise en contact du véhicule, le volant 4 est dans une position angulaire θᵥ₂, à laquelle correspond une mesure θₐ₂ de la position angulaire de l'anneau multipolaire 11, la variation θₐ₂ - θₐ₁ de la position angulaire absolue θₐ ayant été mesurée pendant la période de la coupure de contact.

Selon une deuxième variante, le dispositif de détermination 10 comprend un système de mise en veille 38 local, qui alimente en courant en permanence le capteur 16, y compris lors d'une coupure de contact du véhicule 1.

A cet effet, le système de mise en veille local 38 est par exemple relié à la batterie d'accumulateurs du véhicule 1, qui l'alimente en courant.

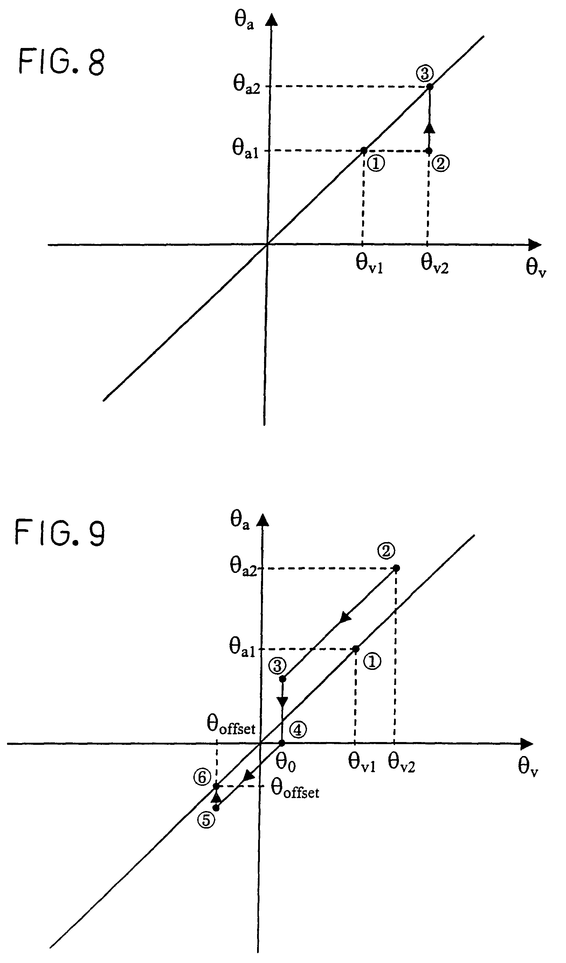

Cette deuxième variante est illustrée sur la figure 8, qui est un graphique représentant la position angulaire absolue θₐ de l'anneau multipolaire 11 en fonction de la position angulaire réelle θᵥ du volant 4.

A un instant ① précédant immédiatement la coupure de contact du véhicule 1, le volant 4 est dans une position angulaire θᵥ₁, à laquelle correspond une mesure θₐ₁ de la position angulaire de l'anneau multipolaire 11.

Lors de la coupure de contact, la valeur de θₐ₁ est mise en mémoire dans la deuxième mémoire 36 (registre d'angle absolu), qui peut être alimentée en courant par le système de mise en veille local 38, au moins lors de cette mise en mémoire.

Les variations de la position angulaire relative θᵣ (égales aux variations de la position angulaire absolue θₐ) sont mesurées par le capteur 16 et incrémentées dans un registre 39.

A un instant ② suivant immédiatement une nouvelle mise en contact du véhicule 1, le volant 4 est dans une position angulaire θᵥ₂ tandis que le registre d'angle absolu a conservé la valeur θₐ₁.

A un instant ③, les moyens de détermination répercutent alors la variation de position angulaire relative θᵣ (égale à la variation de position réelle θᵥ₂ - θᵥ₁) sur la valeur de la position angulaire absolue θₐ et affectent à la valeur de position angulaire absolue une valeur correspondante θₐ₂.

De la sorte, une variation de la position réelle θᵥ du volant 4 lorsque le véhicule 1 est hors fonction n'entraîne pas de défaut de mesure de la position angulaire absolue θₐ lors de la mise en marche suivante du véhicule 1.

Il peut arriver que le système de mise en veille, qu'il soit global 37 ou local 38, soit à son tour mis hors circuit ou hors fonction, notamment lorsque la batterie d'accumulateur du véhicule n'assure plus sa fonction (lorsqu'elle est vide ou débranchée pour être changée).

Les valeurs des positions angulaires relative θᵣ et absolue θₐ sont alors perdues.

Le système de mesure 9 procède alors à la réinitialisation du registre d'angle absolu, par exemple selon la procédure de réinitialisation décrite plus haut.

Cette réinitialisation est par ailleurs illustrée sur le graphique de la figure 9, qui représente la position angulaire absolue θₐ de l'anneau multipolaire en fonction de la position angulaire réelle θᵥ du volant 4.

A un instant ① précédant immédiatement la coupure de contact du véhicule 1, le volant 4 est dans une position angulaire θᵥ₁, à laquelle correspond une mesure θₐ₁ de la position angulaire de l'anneau multipolaire 11.

A un instant ② suivant immédiatement une nouvelle mise en contact du véhicule 1, le volant 4 est dans une position angulaire θᵥ₂ tandis que le registre 36 d'angle absolu contient une valeur θₐ₂ quelconque.

Les variations de la position relative θᵣ de l'anneau multipolaire 11 mesurées par le capteur 16 sont répercutées sur la position angulaire absolue θₐ jusqu'à un instant ③ , où est détectée la valeur θ₀ proche de la position angulaire de référence.

A un instant ④ suivant immédiatement l'instant ③ , les moyens de recalage 28 affectent alors la valeur de la position angulaire de référence (nulle) à la position angulaire absolue θₐ.

Les variations de la position relative θᵣ de l'anneau multipolaire 11 mesurées par le capteur 16 sont répercutées sur la position angulaire absolue θₐ jusqu'à un instant ⑤ , où est détectée l'impulsion « top tour » de référence.

A un instant ⑥ suivant immédiatement l'instant ⑤ , les moyens de recalage 28 affectent alors la valeur d'offset θ_{offset} à la position angulaire absolue θₐ.

Par la suite, les variations de la position relative θᵣ de l'anneau multipolaire mesurées par le capteur 16 sont répercutées sur la position angulaire absolue θₐ jusqu'à la coupure de contact suivante.

La réinitialisation du registre de position angulaire absolue peut être prévue alors que le véhicule 1 est à l'arrêt.

Avant que soit rebranchée la batterie (ou tout autre dispositif alimentant le système de mise en veille 37, 38 en courant), le volant 4 est mis dans une position voisine de sa position d'équilibre.

La batterie est alors rebranchée, puis le volant 4 est tourné de manière que la position top tour de référence soit détectée.

La valeur d'offset θ_{offset}, contenue dans la première mémoire 35, est alors affectée à la valeur de la position angulaire absolue θₐ.

Bien que la mesure de position absolue θₐ ait été appliquée dans la présente description à un volant de direction 4 tournant par rapport au châssis 5 d'un véhicule 1, cette mesure est applicable à tout type d'organe tournant par rapport à une structure fixe.

En particulier, l'anneau multipolaire peut être monté sur la bague tournante d'un roulement à billes ou à rouleaux, le capteur étant par exemple monté sur la bague fixe.

## Revendications

1. Dispositif de détermination de la position angulaire absolue (θₐ) d'un organe tournant (3, 4) par rapport à une structure fixe (5) au moyen d'un capteur (16) de position angulaire relative (θᵣ), comprenant :
- un anneau magnétique multipolaire (11) circulaire mobile en rotation, destiné à être solidaire de l'organe tournant (3, 4), l'anneau multipolaire (11) étant apte à effectuer, conjointement à l'organe tournant (3, 4), une pluralité de tours autour de son axe de rotation (R) à partir d'une position angulaire dite de référence, ledit anneau (11) comprenant une piste principale (14) et une piste de référence (15) dite « top tour », les pistes principale (14) et « top tour » (15) étant concentriques sur l'anneau magnétique (11) ;
- un capteur magnétique fixe (16), destiné à être solidaire de la structure fixe (5), disposé en regard et à distance d'entrefer de l'anneau multipolaire (11), et comprenant au moins trois éléments sensibles (17, 18, 19) dont au moins deux (17, 18) sont positionnés en regard de la piste principale (14) de sorte à délivrer deux signaux électriques (A, B) périodiques en quadrature et au moins un (19) est positionné en regard de la piste de référence (15) de sorte à délivrer un signal électrique (C) de référence dit « top tour », sous forme d'une impulsion électrique par tour du codeur multipolaire (11), cette impulsion correspondant à une position angulaire dite « top tour», de l'organe tournant (3, 4) par rapport à la structure fixe (5), le décalage angulaire entre la dite position angulaire de référence et la dite position angulaire « top tour » étant dit « offset » (θ_{offset}) ;
- des moyens de comptage (20) des impulsions issues des signaux (A, B) aptes à permettre la détermination de la position angulaire relative (θᵣ) de l'anneau multipolaire (11) et les variations de cette position angulaire relative (θᵣ) ;
ce dispositif de détermination (10) étant **caractérisé en ce qu'**il comprend un dispositif de traitement (26) comportant
- des moyens de détection (27) d'une position angulaire (θ₀) de l'anneau multipolaire (11) proche de la dite position angulaire de référence ;
- des moyens de recalage (28) de la position angulaire absolue (θₐ) de l'anneau (11), actionnés par les moyens de détection (27), aptes à affecter, lors de la détection d'une impulsion du signal « top tour » (C), la valeur d'offset (θ_{offset}) à la valeur de la position angulaire absolue (θₐ) de l'anneau multipolaire (11) par rapport à sa position angulaire de référence ; et
- des moyens de détermination (29) de la position angulaire absolue (θₐ) de l'anneau (11) sur l'ensemble des tours effectué par l'organe tournant (3, 4), à partir de la valeur d'offset (θ_{offset}) et des variations de la position angulaire relative (θᵣ).

2. Dispositif selon la revendication 1, **caractérisé en ce que** les dits moyens de recalage (28) sont agencés pour affecter la dite valeur de référence à la valeur de la position absolue (θₐ) lors de la détection de la position angulaire (θ₀) proche de la valeur de référence.

3. Dispositif selon la revendication 1 ou la revendication 2, **caractérisé en ce que** le dispositif de traitement (26) se présente sous la forme d'un microrégisseur apte à recevoir les signaux délivrés par le capteur (16).

4. Dispositif selon la revendication 3, **caractérisé en ce qu'**il comprend une première mémoire (35) du type EEPROM ou mémoire flash, apte à mémoriser la valeur d'offset (θ_{offset}), reliée au dit microrégisseur (26).

5. Dispositif selon la revendication 3 ou la revendication 4, **caractérisé en ce que** le dispositif de traitement (26) comprend une deuxième mémoire (36) du type EEPROM ou mémoire flash, apte à mémoriser la valeur de la position absolue (θₐ) de l'anneau multipolaire (11) par rapport à sa position angulaire de référence.

6. Dispositif selon l'une des revendications 1 à 5, **caractérisé en ce qu'**il comprend un système de mise en veille dit « local » (38), apte à alimenter en courant le capteur (16) en permanence pour le maintenir en fonction.

7. Dispositif selon l'une des revendications 1 à 5, **caractérisé en ce qu'**il comprend un système un système de mise en veille dit « global » (37), apte à alimenter en courant le capteur (16) et le dispositif de traitement (26) en permanence pour permettre le calcul de la position angulaire absolue (θₐ) du codeur multipolaire (11) à tout instant.

8. Système de mesure de la position angulaire absolue (θₐ, θᵥ) d'un volant de direction (4) d'un véhicule (1) par rapport au châssis (5) du véhicule (1), **caractérisé en ce qu'**il comprend un dispositif (10) selon l'une des revendications 3 à 7, l'anneau magnétique (11) multipolaire étant solidaire du volant de direction (4), le capteur magnétique (16) étant solidaire du châssis (5), le dit système de mesure (9) comprenant en outre des moyens de mesure (23) de la vitesse du véhicule et des moyens de mesure (21, 22) de la vitesse (V_{d}, V_{g}) des roues directrices (6, 7) du véhicule (1), les moyens de détection (27) comprenant des moyens de différentiation (31) de ces vitesses (V_{g}, V_{d}).

9. Système de mesure selon la revendication 8, **caractérisé en ce que** les moyens de détection (27) comprennent un premier moyen comparateur (30) de la vitesse du véhicule à une première valeur seuil (S1), ainsi qu'un deuxième moyen comparateur (32) de valeur absolue de la différence (V_{dif}) des vitesses (V_{g}, V_{d}) des roues (6, 7) à une deuxième valeur seuil (S2).

10. Système de mesure selon la revendication 8 ou la revendication 9, **caractérisé en ce qu'**il comprend des moyens de mesure (24) du couple (Γ) appliqué sur le volant de direction (4), les moyens de détection (27) comprenant un troisième moyen comparateur (33) de la valeur du couple (Γ) à une troisième valeur seuil (S3).

11. Système de mesure selon l'une des revendications 8 à 10, **caractérisé en ce qu'**il comprend des moyens de mesure (25) de la vitesse de rotation (Vᵥₒₗ) du volant de direction (4), les moyens de détection (27) comprenant un quatrième moyen comparateur (34) de la valeur de la vitesse de rotation (Vᵥₒₗ) à une quatrième valeur seuil (S4).

12. Procédé de mesure de la position angulaire absolue d'un volant de direction (4) d'un véhicule (1) par rapport au châssis (5) de celui-ci, au moyen d'un système de mesure (9) selon l'une des revendications 8 à 11, qui comprend une procédure d'initialisation réalisée lors d'une mise en fonction du dispositif (10), cette procédure comportant les étapes prévoyant de :
- détecter la position angulaire (θ₀) proche de la position angulaire de référence ;
- détecter une impulsion « top tour » ;
- affecter la valeur d'offset (θ_{offset}) à la valeur de la position angulaire absolue (θₐ) de l'anneau multipolaire (11);

13. Procédé selon la revendication 12, **caractérisé en ce qu'**il comprend les étapes prévoyant, après la procédure d'initialisation, de :
- compter en continu les signaux (A, B) issus du capteur ;
- répercuter en continu toute variation de la position angulaire relative (θᵣ) sur la position angulaire absolue (θₐ) de l'anneau multipolaire (11).

14. Procédé selon la revendication 12 ou la revendication 13, **caractérisé en ce qu'**il comprend les étapes prévoyant, préalablement à la détection de la position angulaire (θ₀) proche de la position angulaire de référence, de compter en continu les signaux (A, B), et de déterminer en continu la position angulaire relative (θᵣ) de l'anneau multipolaire (11).

15. Procédé selon l'une des revendications 12 à 14, **caractérisé en ce que** la procédure d'initialisation comprend une étape prévoyant, entre la détection de la position angulaire (θ₀) proche de la position angulaire de référence et la détection de l'impulsion « top tour », d'affecter la valeur de la position angulaire de référence à la valeur de la position angulaire absolue (θₐ).

16. Procédé selon l'une des revendications selon l'une des revendications 12 à 15, **caractérisé en ce qu'**il comprend les étapes prévoyant de :
- activer un système de mise en veille (38) dit « local » alimentant en courant le capteur (16) en permanence ;
- mémoriser la valeur de la position absolue (θₐ) ;
- compter en continu les signaux (A, B) issus du capteur (16) pour mesurer la variation de la position relative (θᵣ) de l'anneau multipolaire (11) ;
- désactiver le système de mise en veille (38) ;
- répercuter la variation de la position relative (θᵣ) sur la valeur de la position absolue (θₐ) mémorisée.

17. Procédé selon l'une des revendications 12 à 16, **caractérisé en ce que** la détection de la position angulaire (θ₀) proche de la position angulaire de référence est réalisée au moyen des étapes suivantes :
- mesurer la vitesse du véhicule (Vᵥ) et la comparer à une première valeur seuil (S1) ;
- mesurer les vitesses (V_{g}, V_{d}) des roues directrices (6, 7) du véhicule (1) et comparer leur différence (V_{dif}) à une deuxième valeur seuil (S2) ;
la dite position angulaire (θ₀) proche de la position angulaire de référence étant détectée si la vitesse du véhicule (Vᵥ) est supérieure à la première valeur seuil (S1), la valeur absolue de la différence (V_{dif}) des vitesses (V_{g}, V_{d}) des roues (6, 7) étant en outre inférieure à la deuxième valeur seuil (S2).

18. Procédé selon la revendication 17, **caractérisé en ce que** la détection de la position angulaire (θ₀) proche de la position angulaire de référence comprend en outre une étape prévoyant de mesurer le couple (Γ) appliqué au volant de direction (4) du véhicule (1) et le comparer à une troisième valeur seuil (S3), la dite position angulaire (θ₀) proche de la position angulaire de référence étant détectée si, en outre, la valeur du couple (Γ) appliqué au volant de direction est inférieur à la troisième valeur seuil (S3).

19. Procédé selon la revendication 18, **caractérisé en ce que** la détection de la position angulaire (θ₀) proche de la position angulaire de référence comprend en outre une étape prévoyant de mesurer la vitesse de rotation (Vᵥₒₗ) du volant de direction (4) du véhicule (1), et la comparer à une quatrième valeur seuil (S4), la dite position angulaire (θ₀) proche de la position angulaire de référence étant détectée si, en outre, la valeur de la vitesse de rotation (Vᵥₒₗ) est inférieure à la quatrième valeur seuil (S4).
